**Europäisches Patentamt**

**European Patent Office**

**Office européen des brevets**

(19)

(11) Veröffentlichungsnummer : **0 355 096 B1**

(12)

# EUROPÄISCHE PATENTSCHRIFT

(45) Veröffentlichungstag der Patentschrift :
**25.03.92 Patentblatt 92/13**

(51) Int. Cl.⁵ : **B23K 26/00**

(21) Anmeldenummer : **88902763.7**

(22) Anmeldetag : **31.03.88**

(86) Internationale Anmeldenummer :
**PCT/AT88/00017**

(87) Internationale Veröffentlichungsnummer :
**WO 88/07431 06.10.88 Gazette 88/22**

(54) **VERFAHREN UND VORRICHTUNG ZUM ENTFERNEN VON BESCHICHTUNGEN MIT EINEM LASERSTRAHL.**

(30) Priorität : **01.04.87 AT 786/87**

(43) Veröffentlichungstag der Anmeldung :
**28.02.90 Patentblatt 90/09**

(45) Bekanntmachung des Hinweises auf die
Patenterteilung :
**25.03.92 Patentblatt 92/13**

(84) Benannte Vertragsstaaten :
**AT BE CH DE FR GB IT LI LU NL SE**

(56) Entgegenhaltungen :
**EP-A- 0 215 389**
**DE-A- 3 600 591**
**GB-A- 2 139 614**
**Technical Digest, N .56, October 1979, L.G. Nivens : "Laser beam wire stripping machine" pages 19, 20.**

(73) Patentinhaber : **STIWA-Fertigungstechnik Sticht Gesellschaft m.b.H**
**Steinhüblstrasse 4**
**A-4800 Attnang-Puchheim (AT)**

(72) Erfinder : **STICHT, Walter**
**Karl-Heinrich-Waggerl-Strasse 8**
**A-4800 Attnang-Puchheim (AT)**
Erfinder : **SCHWANKHART, Gerhard**
**Tuffeltsham 68**
**A-4800 Attnang-Puchheim (AT)**

(74) Vertreter : **Wolke, Heidemarie, Dr.**
**Stadtplatz 7**
**A-4400 Steyr (AT)**

EP 0 355 096 B1

Jouve, 18, rue Saint-Denis, 75001 PARIS

EP 0 355 096 B1

## Beschreibung

Die Erfindung betrifft ein Verfahren zum Entfernen von Beschichtungen von Bauteilen, mit einem Laserstrahl, insbesondere zum Entfernen von Isolierschichten von Drähten, bei dem durch eine Relativbewegung zwischen dem Laserstrahl und dem Bauteil der Laserstrahl auf den Bereich, in welchem die Beschichtung entfernt werden soll, gerichtet ist sowie über diesen bewegt wird und die Beschichtung durch den Laserstrahl über den Verdampfungspunkt erhitzt wird sowie eine zur Durchführung des Verfahrens geeignete Vorrichtung.

Es sind bereits Verfahren zum Entfernen von Beschichtungen von Bauteilen bekannt geworden - gemäß EP-A1-0 215 389 -, die dazu verwendet werden können, um auf Bauteilen unter Verwendung von Laserstrahlen vollautomatisch ständig wechselnde Beschriftungsbilder aufbringen zu können. Die notwendigen Bildelemente können in einem Rechner gespeichert werden und je nach Bedarf, beispielsweise bei der Beschriftung von Meßgeräten oder dgl. in Abhängigkeit von Meßergebnissen auf die Bauteile aufgebracht werden. Das Schriftbild wird durch eine Aneinanderreihung einer Vielzahl von Punkten hergestellt. Die dafür verwendeten Farbschichten werden so ausgewählt, daß eine gute Auswertung der mit dem Laser aufgebrachten Energie erreicht wird und die verwendeten Lackschichten bei relativ geringen Temperaturen verdampfen.

Desweiteren ist auch ein Verfahren und eine Vorrichtung zum Entfernen von Verunreinigungen von der Oberfläche von Metall mittels Laserstrahlen bekannt geworden - gemäß DE-A1-36 00 591 -, bei welchem die Tätigkeit des Lasers in Abhängigkeit vom Emissionsspektrum der abgedampften Verunreinigungen gesteuert wird. Der Laserstrahl wird solange über die zu reinigenden Oberflächen geführt, bis keine eine Verunreinigung anzeigende Emissionen von einem im Bereich der zu reinigenden Oberfläche angeordneten Detektor festgestellt werden können.

Weiters ist es auch bereits bekannt - gemäß der Zeitschrift Technical Digest, Nr.56, Oktober 1979, Seiten 19 und 20 - zum Abisolieren von Drähten einen Laserstrahl in mehrere Einzelstrahlen aufzufächern. Die einzelnen Strahlenteile des Laserstrahls werden über den Umfang des abzuisolierenden Drahtes verteilt, tangential an den Draht angelegt und schmelzen in diesen einander benachbarten parallel zueinander verlaufenden Arbeitsbereichen von einem kontinuierlich vorbeigeführten Draht die Isolierung ab. Durch die einander unmittelbar benachbarte Anordnung der einzelnen Arbeitsbereiche der Teilstrahlen des Laserstrahles wird eine exakte Entfernung der Isolierung über den gesamten Umfang des Drahtes erreicht.

Der vorliegenden Erfindung liegt die Aufgabe zugrunde, ein Verfahren und eine Vorrichtung zum Entfernen von Beschichtungen der oben an geführten Art zu schaffen, mit welchem, insbesondere Isolierschichten von einen Metallkern aufweisenden Bauteil entfernt werden können und welches einfach und mit geringem Aufwand betrieben werden kann. Darüberhinaus soll der Aufbau der Vorrichtung unkompliziert sein und eine hohe Genauigkeit aufweisen. Insbesondere soll mit dem erfindungsgemäßen Verfahren sowie der Vorrichtung ein Entfernen von Beschichtungen von zylinderförmigen Körpern ermöglicht werden.

Diese Aufgabe der Erfindung wird dadurch gelöst, daß ein Teil der Beschichtung durch den seitlich am Bauteil vorbeigeführten und über eine Reflexionsvorrichtung reflektierten Laserstrahl verdampft wird. Dadurch ist es möglich, eine Beschichtung auf zwei gegenüberliegenden Seiten eines Bauteiles in einem Arbeitsgang zu entfernen, ohne daß der Laserstrahl um den Bauteil herumgeführt werden muß. Dieser überraschende Vorteil wird dadurch erreicht, daß der Laserstrahl über die Breite der Bauteiles hinausgeführt und mittels einer Reflexionsvorrichtung auf die dem Laserstrahl gegenüberliegenden Bereiche der Bauteiles reflektiert wird. Von Vorteil ist dabei, daß durch das Verfahren eine ständig fortlaufende Erhitzung der Beschichtung erfolgt, da der Laserstrahl kontinuierlich bis in den Seitenbereich des Bauteiles verschwenkt wird und durch die Umlenkung mit der Reflexionsvorrichtung beim Austreten in den Bereich neben dem Bauteil unmittelbar in diesen Bereich zurückreflektiert wird, sodaß das Verdampfen der Beschichtung nahtlos von der entgegengesetzten Seite her fortgesetzt werden kann.

Es ist weiters aber auch möglich, daß der Laserstrahl und der Bauteil in eine winkelig zueinander verlaufende Lage verbracht werden und der Laserstrahl quer zu einer Längsachse des Bauteiles um ein Ausmaß verschwenkt wird, welches größer ist, als eine Breite des Bauteiles. Dadurch ist es möglich, mit einer gleichbleibenden oszillierenden Bewegung des Laserstrahles nur durch eine Relativverstellung des Bauteiles und des Laserstrahles in Richtung der Längsachse des Bauteiles eine Beschichtung über einen entsprechenden Bereich zu entfernen.

Von Vorteil ist es aber auch, wenn das Ausmaß zumindest der doppelten Breite des Bauteiles entspricht, da dadurch über jenen Schwenkbereich des Laserstrahles, der neben dem Bauteil liegt, der Strahl durch eine hinter dem Bauteil angeordnete Reflexionsvorrichtung auf die Rückseite des Bauteiles reflektiert und damit die Beschichtung auf der Rückseite entfernt werden kann.

Nach einer anderen Vorgangsweise ist vorgesehen, daß die Reflexionsvorrichtung in Richtung des Laserstrahles hinter dem Bauteil angeordnet ist und eine Distanz zwischen der Reflexionsvorrichtung und dem Bauteil einer Brennweite der Reflexionsvorrichtung entspricht, wodurch auch beim Abtragen der Beschichtung auf

2

einer Rückseite des Bauteiles etwa gleiche Energie zur Verfügung steht, wie bei einem direkten Auftreffen des Laserstrahles auf der Beschichtung.

Weiters ist es auch möglich, daß der Laserstrahl soweit über eine Seitenbegrenzung des Bauteiles hinausgeführt wird, bis sich der von der Reflexionsvorrichtung reflektierte Hauptstrahl zumindest im Mittel eines vom Laserstrahl abgewendeten Beschichtungsteiles befindet, wodurch das Ausmaß der Schwenkbewegung des Laserstrahles gering gehalten werden kann.

Nach einer weiteren Ausführungsvariante ist vorgesehen, daß der Laserstrahl beidseits über die Seitenbegrenzung des Bauteiles soweit hinausgeführt wird, daß sich die von der Reflexionsvorrichtung reflektierten Hauptstrahlen in ihrer beidseits des Bauteiles distanzierten Endstellung auf der vom Laserstrahl abgewendeten Seite des Bauteiles überschneiden, wodurch durch eine zum Bauteil symmetrische Schwenkbewegung des Laserstrahles ein einwandfreier Abtrag der Beschichtungen auf zwei einander gegenüberliegenden Seiten eines Bauteiles ermöglicht wird.

Vorteilhaft ist es weiters, wenn die Brennpunkte von Linsen und bzw. oder Spiegeln einer Sammellinsenvorrichtung und bzw. oder der Reflexionsvorrichtung beidseits des Bauteiles auf einer gemeinsamen Geraden angeordnet werden und der Bauteil mit den zu bearbeitenden Bereichen zwischen der Reflexions- und Sammellinsenvorrichtung angeordnet ist und die Gerade den Bauteil tangiert, da dadurch auf beiden Seiten des Bauteiles ein einwandfreies Abdampfen von Beschichtungen möglich ist und in Verbindung mit der Reflexionsvorrichtung eine symmetrische Verlagerung des der Rückseite des Bauteiles zugeordneten reflektierten Laserstrahles bei einem Ausschwenken des Laserstrahles seitlich neben den Bauteilen einfach erreicht werden kann.

Nach einer weiteren Vorgangsweise ist vorgesehen, daß ein Hauptstrahl einer Eingangspupille bei auf dem Brennpunkt der Linsen und bzw. oder Spiegel gerichteten Laserstrahlen mit der Geraden fluchtet, wodurch die volle Energie zum Abdampfen der Beschichtung bereits am Beginn der Bearbeitung vorliegt.

Weiters ist es auch möglich, daß der Laserstrahl über die Eintrittspupille und über einen Schwenkspiegel und eine Sammellinsenvorrichtung auf den Bauteil oder auf die Reflexionsvorrichtung, z.B. einen Hohlspiegel gerichtet wird, wodurch mit einem einzelnen Laserstrahl die Beschichtungen auf zwei einander gegenüberliegenden Flächen eines Bauteiles entfernt werden kann.

Von Vorteil ist es weiters, wenn der Laserstrahl zwischen den beiden Endstellungen pendelt und jeweils bei Erreichen einer der Endstellungen der Laserstrahl und der Bauteil um ein, einer Dicke des Laserstrahles senkrecht zur Pendelbewegung entsprechendes Ausmaß, relativ zueinander verstellt werden, da dadurch mit einer gleichförmig ablaufenden Scanbewegung die Beschichtung abgetragen werden kann und die Beschichtung immer in Richtung der bereits vorgewärmten Bereiche weiter abgeschmolzen wird, sodaß ein kontinuierlich fortschreitender Abdampfvorgang erreicht wird. Dadurch wird verhindert, daß es zu Verkrustungen der Beschichtung kommt. Diese Verkrustungen sind nämlich äußerst störend. da sie meist mit einer Verfärbung der Beschichtung in einem dunklen Farbbereich verbunden sind. Diese bewirkt eine Energiekonzentration des Laserstrahles an dieser Stelle, sodaß die reflektierende Wirkung des darunter angeordneten Metallkernes, beispielsweise Kupfer nicht mehr ausgenutzt werden kann und der Kupferdraht durch die im Bereich der dunklen stelle aufgenommenen Hitze durchschmilzt.

Es ist aber auch möglich, daß der Laserstrahl im Bereich der Endstellungen jeweils um ein einer Dicke des Laserstrahles senkrecht zur Pendelbewegung entsprechendes Ausmaß senkrecht zur Pendelrichtung verstellt wird, da dadurch lediglich eine Verstellung des Laserstrahles erforderlich ist, während der Bauteil während des gesamten Arbeitsablaufes ruhig gehalten werden kann.

Vorteilhaft ist es aber auch, wenn der Bauteil eine Pendelbewegung gegenüber dem Laserstrahl ausführt und der Laserstrahl jeweils senkrecht zu der Pendelbewegung verstellt wird, da der Laserstrahl in diesem Fall lediglich eine Schwenkbewegung ausführen muß und präzise Höhenführungen für den Laserstrahl eingespart werden können.

Nach einer anderen Verfahrensvariante ist vorgesehen, daß die beim Vergasen der Beschichtung entstehenden Dämpfe aus dem Arbeitsbereich, z.B. kontinuierlich abgeführt werden, da dadurch verhindert wird, daß sich diese Dämpfe wieder auf den Bauteil niederschlagen können und daß Einbrennstellen der Beschichtung auf der Oberfläche des Bauteiles bzw. des Metallkernes des Bauteiles entstehen.

Günstig ist es aber auch, wenn die Dämpfe abgesaugt werden, da dadurch eine Trübung der Luft im Arbeitsbereich verhindert wird.

Nach einer anderen Ausführungsvariante ist vorgesehen, daß der Laserstrahl auf mehrere Teilstrahlen aufgeteilt und über mehrere Umlenkvorrichtungen, im wesentlichen senkrecht auf die zu bearbeitender Flächenbereiche reflektiert wird, wobei eine Leistung des Laserstrahles pro Flächeneinheit der Bearbeitungsfläche über den gesamten Querschnitt der Bearbeitungsfläche und bzw. oder für jeden Teilstrahl in etwa gleich groß ist, wodurch der Auftreffwinkel der Teilstrahlen des Laserstrahles über die gesamte Oberfläche eines Bauteiles, vor allem eines zylinderförmigen Bauteiles gleichgehalten werden kann. Dadurch wird ein sogenannter Äquatoreffekt verhindert, das heißt, daß ein zu flacher Winkel zwischen dem Laserstrahl und der Oberfläche des Bauteiles vermieden wird bei welchem die Energie dann nicht mehr ausreichend ist, um die Beschichtung abzudampfen.

Vorteilhaft ist es weiters, wenn der Laserstrahl bzw. die Laserteilstrahlen entlang von sich einander zumindest berührenden Bewegungsbahnen über den Bearbeitungsbereich geführt werden und über den gesamten Bearbeitungsbereich eine Distanz zwischen der zu bearbeitenden Oberfläche und dem Brennpunkt des Laserstrahles bzw. Laserstrahlteiles gleich gehalten wird, da dadurch die auf die Beschichtung einwirkende Energie über den gesamten Arbeitsbereich möglichst gleichgehalten werden kann, sodaß das Verbleiben von Restteilen der Beschichtung zuverlässsig verhindert ist.

Weiters ist es auch möglich, daß dem Bauteil, insbesondere einem unter der Beschichtung angeordneten Metallkörper vor und bzw. oder während des Abdampfens der Beschichtung Wärme zugeführt wird, wodurch die vom Laser aufzubringende Energie, um die Beschichtung abzudampfer, geringer gehalten werden kann.

Die Erfindung umfaßt weiters auch eine Vorrichtung zum Entfernen von Beschichtungen von Bauteilen, insbesondere zum Entfernen von Isolierschichten von Drähten mit einem Laserstrahl, mit einem Laser, einer Laserstrahlleitvorrichtung, einer Sammellinsenvorrichtung für den Laserstrahl sowie einer Haltevorrichtung für den Bauteil und einer Steuereinrichtung mit einer Nachführvorrichtung für den Laserstrahl und bzw. oder den Bauteil zur Durchführung des Verfahrens.

Diese Vorrichtung ist dadurch gekennzeichnet, daß auf der von der Sammellinse abgewendeten Seite der Haltevorrichtung des Bauteiles eine Reflexionsvorrichtung für den Laserstrahl angeordnet ist und die Nachführvorrichtung einen Verstellbereich aufweist, der größer ist als eine Breite des Bauteiles im Bereich der zu verdampfenden Beschichtung. Durch eine derartige Ausbildung der Nachführvorrichtung in Verbindung mit der Anordnung einer Reflexionsvorrichtung ist es möglich, im Zuge einer linearen Bewegung Beschichtungen voneinander gegenüberliegenden Flächen eines Bauteiles in einem Arbeitsgang abzutragen, ohne daß eine Schwenk- bzw. Drehbewegung des Bauteiles oder des Laserstrahles notwendig ist. Der damit verbundene Aufwand kann dadurch in einfacher Weise eingespart werden.

Vorteilhaft ist es weiters, wenn die Reflexionsvorrichtung durch einen Hohlspiegel gebildet wird, da dadurch beim Verschwenken des Laserstrahles neben dem Bauteil eine Reflexion des Laserstrahles auf eine Rückseite des Bauteiles in einfacher Weise erfolgen kann.

Es ist aber auch möglich, daß die Reflexionsvorrichtung durch eine plankonvexe Linse und einen planen Spiegel gebildet wird und die konvexe Seite der Linse dem Spiegel und die plane Seite der Sammellinse zugewendet ist, da in diesem Fall vor allem beim Bearbeiten von einander gegenüberliegenden planen Flächen eine einfachere Einstellung des reflektierten Laserstrahles auf die zu bearbeitende Fläche möglich ist.

Weiters ist es auch möglich, daß ein Brennpunkt der Sammellinse und bzw. oder des Hohlspiegels im wesentlichen zwischen einer Oberfläche der abzudampfenden Beschichtung und dem darunter angeordneten Kernmaterial, z.B. einem Metallkern angeordnet ist, wodurch der größte Teil der Energie innerhalb der Beschichtung zum Abdampfen derselben vorliegt.

Vorteilhaft ist es weiters, wenn zwischen dem Lasergenerator und der der Reflexionsvorrichtung gegenüberliegenden Seite der Sammellinse die Nachführvorrichtung für den Laserstrahl angeordnet ist, wodurch der Strahl bereits in der gewünschten Lage entsprechend konzentriert wird und Leistungsverluste im Umlenkbereich des konzentrierten Strahles vermieden werden.

Nach einer weiteren Ausführungsform ist es weiters möglich, daß die Nachführvorrichtung durch einen schwenkbaren Umlenkspiegel gebildet ist, wodurch in einfacher Weise ein Scanen des Laserstrahles mit einem geringen Aufwand an bewegten Teilen erzielt werden kann. Überdies ist es dabei in einfacher Weise möglich, durch eine geringfügige Veränderung des Schwenkwinkels die Auslenkbreite des Laserstrahles zu verändern.

Weiters ist es auch möglich, daß die Nachführvorrichtung durch einen rotierenden Spiegel oder ein Prisma gebildet ist und ein Schwenkwinkel des Laserstrahles größer ist, als ein Winkel zwischen an die beiden Seiten des Bauteiles angelegten Tangenten, wodurch in einfacher Weise durch eine Veränderung der Drehzahl die Kriterien der Oszillationsbewegung, nämlich die Bewegungsgeschwindigkeit und die Anzahl der Schwenkbewegungen pro Zeiteinheit verändert werden können.

Es ist aber auch möglich, daß die Haltevorrichtung des Bauteiles mit der Nachführvorrichtung verbunden ist, wodurch der Laserstrahl und die Linsenanordnungen fix und feststehend angeordnet werden können.

Nach einer anderen Ausführungsform ist vorgesehen, daß die Sammellinse und die Reflexionsvorrichtung auf einem Tragrahmen bevorzugt unabhängig voneinander einstellbar gelagert sind und der Tragrahmen Justiervorrichtungen lagert, die eine z.B. durch eine Gewindespindel gebildete Nachführvorrichtung aufweisen, wodurch in einfacher Weise eine exakte Einstellung der Brennpunkte unter Bezugnahme auf die zu entfernende Beschichtung möglich ist und diese Abstrandsverhältnisse durch eine exakte Verschiebung des Laserstrahles über den gesamten Bearbeitungsbereich einfach beibehalten werden können.

Schließlich ist es auch möglich, daß die Haltevorrichtung für den Bauteil auf einem Werkstückträger angeordnet ist und die Nachführvorrichtung durch eine Antriebsvorrichtung für den Werkstückträger gebildet ist, wodurch in einfacher Weise die für den Werkstückträger-Vorschub ohnehin notwendige Antriebsvorrichtung auch zum Nachführen des Bauteiles verwendet werden kann und der notwendige Aufwand für die Verstellvorrichtung gering gehalten werden kann. .

Zum besseren Verständnis der Erfindung wird diese anhand der in den Zeichnungen gezeigten Ausführungsbeispielen näher beschrieben.

Es zeigen :

Fig. 1 eine Vorrichtung zum Entfernen von Beschichtungen von Bauteilen mit einem Laserstrahl in Seitenansicht und in stark vereinfachter schematischer Darstellung;

Fig. 2 die Vorrichtung nach Fig.1 in Draufsicht mit einem Strahlenverlauf des Laserstrahles zum Entfernen einer Beschichtung auf der dem Laserstrahl zugewandten Seite des Bauteiles;

Fig. 3 eine vergrößerte Darstellung eines Strahlenverlaufes der in Fig.2 dargestellten Vorrichtung im Bereich des Bauteiles;

Fig. 4 die Vorrichtung nach Fig. 1 in Draufsicht mit einem Strahlenverlauf eines reflektierten Laserstrahles zum Entfernen der Beschichtung auf einer vom eintreffenden Laserstrahl abgewandten Seite eines Bauteiles;

Fig. 5 die Vorrichtung nach Fig. 1 in Draufsicht bei einer in einer Endlage befindlichen Stellung des Laserstrahles;

Fig. 6 den Bauteil in Rückansicht mit der Bewegungsbahn des reflektierten Laserstrahles auf der vom Laserstrahl abgewandten Seite desselben;

Fig. 7 den Bauteil in Stirnansicht mit der Bewegungsbahn des Laserstrahles auf der dem Laserstrahl zugewandten Seite desselben;

Fig. 8 eine andere Ausführungsform einer erfindungsgemäßen Vorrichtung in Seitenansicht und teilweise geschnitten;

Fig. 9 ein Blockschaltbild einer Steuereinrichtung für die Vorrichtung zum Entfernen von Beschichtungen von Bauteilen mit einem Laserstrahl in vereinfachter schematischer Darstellung;

Fig. 10 einen Programmablauf für einen Steuerrechner der Steuereinrichtung zum Betrieb der Vorrichtung zum Entfernen von Beschichtungen von Bauteilen mit einem Laserstrahl.

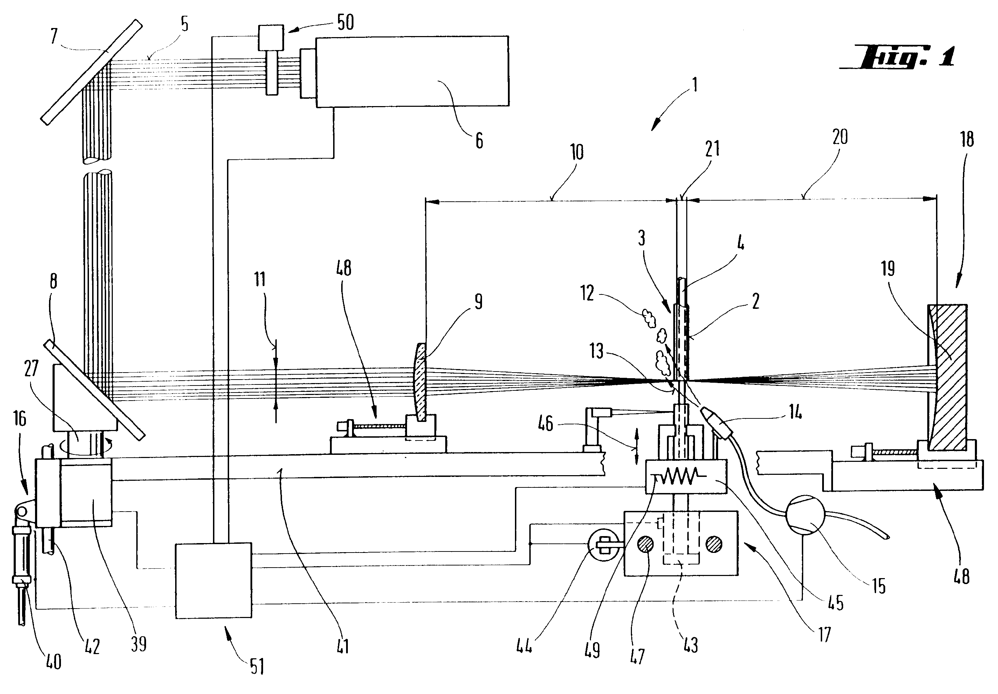

In Fig.1 ist eine Vorrichtung 1 zum Entfernen einer Beschichtung 2, z.B. einer Isolierschicht von einem Bauteil 3, z.B. einem Draht mit einem Metallkern 4, beispielsweise einen Kupferdraht. Die Vorrichtung 1 ist mit einem einen Laserstrahl 5 erzeugenden Lasergenerator 6 ausgestattet. Der vom Lasergenerator 6 kommende Laserstrahl 5 wird über zwei Umlenkspiegel 7,8 und eine Sammellinse 9 auf den Bauteil 3 gerichtet. Eine Distanz 10 zwischen einer, dem Bauteil 3 zugewandten Stirnseite der Sammellinse 9 und der Beschichtung 2 des Bauteiles 3 entspricht im wesentlichen einer Scheitelbrennweite der Sammellinse 9. Der mit einem Durchmesser 11 vom Umlenkspiegel 8 reflektierte Laserstrahl 5 wird durch die Sammellinse 9 auf einen punktförmigen Strahl mit geringem Durchmesser konzentriert und weist in der, der Scheitelbrennweite entsprechenden Distanz 10 von der Sammellinse 9 eine hohe Energie auf. Durch die beim Auftreffen des Laserstrahles auf der Beschichtung 2 entstehende hohe Temperatur wird diese Beschichtung 2 verdampft, wie dies schematisch durch Abgaswolken 12 angedeutet ist. Diese Abgaswolken 12 können durch einen schematisch durch Pfeile 13 angedeuteten Luftstrom aus einer Düse 14 sofort aus dem Bereich des Bauteiles weggeblasen werden. Die benötigte Luft wird dabei über einen Kompressor oder Ventilator 15 zugeführt oder kann einem vorhandenen Preßluftsystem entnommen werden. Selbstverständlich ist es auch möglich, anstelle eines positiven Luftstromes auch einen negativen Luftstrom zu verwenden, daß heißt die Abgaswolken 12 abzusaugen, wobei Düsen 14 zur Erzeugung eines Luftstromes und Absaugdüsen zum Absaugen der Verdampfungsabgase auch miteinander kombiniert werden können.

In Verbindung mit den Fig.2 bis 7 ist gezeigt, wie mittels des Laserstrahles 5 eine Beschichtung 2, die sich über den gesamten Umfang eines Metallkernes 4 mit rundem Querschnitt erstreckt, entfernt werden kann. Dazu ist der Umlenkspiegel 8 der Laserstrahlleitvorrichtung mit einer Nachführvorrichtung 16 und/oder der Bauteil 3 mit einer Nachführvorrichtung 17 verbunden. Selbstverständlich ist es auch möglich, wie nachfolgend noch erläutert werden wird, die Bewegungen aufzuteilen und sowohl den Umlenkspiegel 8 als auch den Bauteil 3 nachzuführen.

Desweiteren ist auf der von der Sammellinse 9 abgewendeten Seite des Bauteiles 3 eine Reflexionsvorrichtung 18 angeordnet, die einen Hohlspiegel 19 umfaßt. Dieser ist z.B. kugelkalottenförmig ausgebildet und besteht aud Aluminium mit einer hochglanzpolierten Oberfläche.

Eine dem Bauteil 3 zugewandte Oberfläche des Hohlspiegels 19 ist in einer Distanz 20 von der, dieser zugewandten Seite der Beschichtung 2, die im wesentlichen der Scheitelbrennweite entspricht, angeordnet. Ein verbleibender Abstand 21 zwischen diesen beiden Brennpunkten entspricht im wesentlichen einer Dicke des Metallkernes 4.

Bei der in Fig.2 gezeigten Stellung des Umlenkspiegels 8 verläuft ein Hauptstrahl 22 - strich-punktiert gezeichnet - deckungsgleich mit einer Geraden 23 - strich-zwei-punktiert gezeichnet.

Wie besser aus Fig.3 zu ersehen ist - in der der Umgebungsbereich des zu bearbeitenden Bauteiles 3 in stark vergrößertem und verzerrtem Maßstab dargestellt ist - liegt ein Brennpunkt 24 der Sammellinse 9 und ein Brennpunkt 25 des Hohlspiegels 19 auf dieser Geraden 23. Desweiteren bildet die Gerade 23 eine Tangente zum Bauteil 3 und verläuft, wie im übrigen aus Fig.2 zu ersehen ist, jeweils unter einem Winkel 26, der 90° beträgt zur Sammellinse 9 bzw. zum Hohlspiegel 19. Der Verlauf dieses Hauptstrahles 22 kann auch als Nullstellung bezeichnet werden.

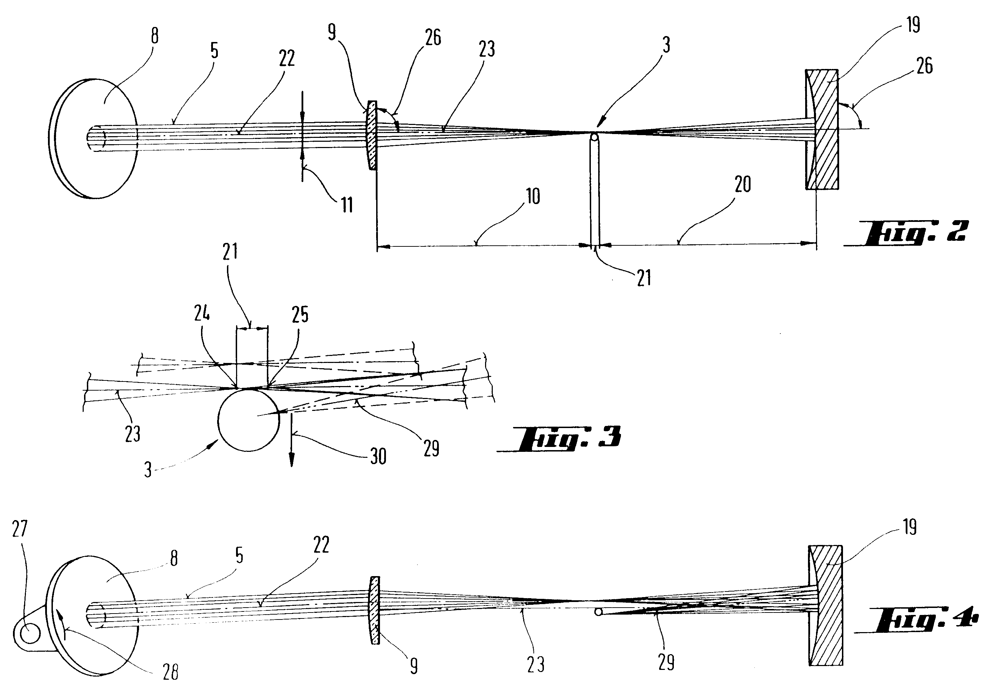

In Fig.4 ist gezeigt, wie der Laserstrahl 5 bzw. dessen Hauptstrahl 22 durch eine Verdrehung des Umlenkspiegels 8 um eine schematisch dargestellte Schwenkachse 27 in Richtung eines Pfeiles 28, in eine winkelige Lage zur Geraden 23 verbracht wird. Durch das Auslenken des Laserstrahles 5 verlagert sich ein Hauptstrahl 29 - in Fig.3 und 4 strich-drei-punktiert dargestellt - des vom Hohlspiegel 19 reflektierten Laserstrahles 5 in entgegengesetzter Richtung entsprechend einem Pfeil 30. In Fig.3 ist eine Zwischenstellung und in Fig.4 die Endstellung dieser Verstellbewegung gezeigt, bei welcher der Hauptstrahl 29 zu der der Geraden 23 gegenüberliegenden Seitenfläche des Bauteiles 3 eine Tangente bildet.

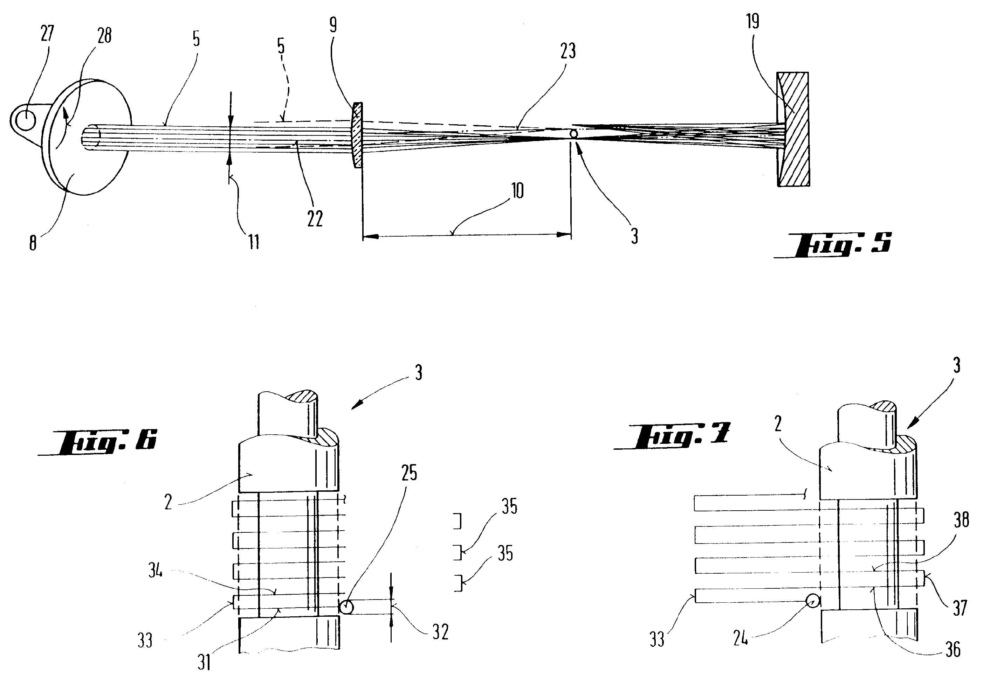

In Fig.5 ist die der Stellung des Laserstrahles 5 in Fig.4 gegenüberliegende Endstellung gezeigt, bei der der Laserstrahl 5 bzw. dessen Hauptstrahl 22 zu der der Geraden 23 gegenüberliegenden Seite des Bauteiles eine Tangente bildet. Der Umlenkspiegel 8 wird dazu, in der dem Pfeil 28 entgegengesetzten Richtung um die Schwenkachse 27 verstellt. In jenem Moment, wo der Laserstrahl 5 seitlich am Bauteil 3 in Fig.5 vorbeigeht, wird er in einem Bereich, der sich im Abstand von der gegenüberliegenden Seite des Bauteiles 3 befindet, reflektiert. Daher endet die Bewegung des Umlenkspiegels 8 in dieser in Fig.5 gezeigten Endstellung und bewest sich dann wieder in Richtung des Pfeiles 28 in die Nullstellung bzw. in die in Fig.4 gezeigte gegenüberliegende Endstellung.

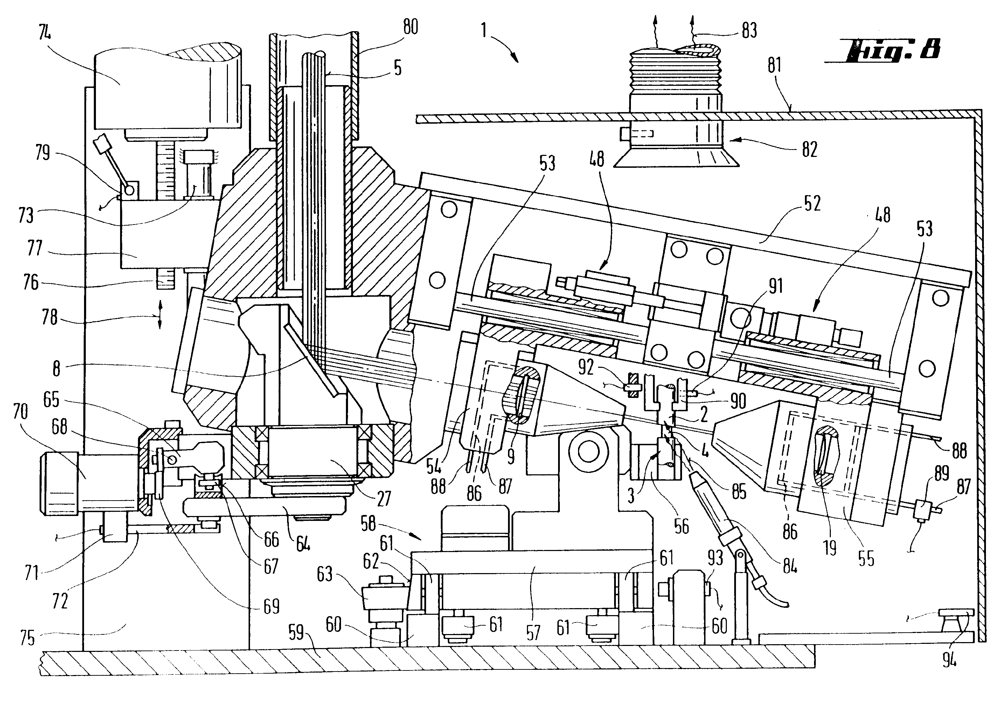

In Fig.6 ist die Bewegung des Hauptstrahles 29 quer zum und in Längsrichtung des Bauteiles 3 schematisch dargestellt, wobei die Bewegung des Hauptstrahles 29 aus der mit der Geraden 23 fluchtenden Stellung in die in Fig.4 gezeigte Stellung dem Bewegungsabschnitt 31 entspricht. Durch die Bewegung des Hauptstrahles 29 und damit natürlich auch des Laserstrahles 5 wurde nun in einer dem Laserstrahl 5 im Bereich des Brennpunktes 25 entsprechenden Durchmesser 32 die Beschichtung 2 entfernt. Um ein kontinuierliches Entfernen der Beschichtung zu ermöglichen, kann in der in Fig.4 gezeigten Stellung des Laserstrahles 5 der Umlenkspiegel 8 oder der Bauteil 3 über die Nachführvorrichtung 16 oder 17 um ein der Durchmesser 32 des Laserstrahles 5 im Brennpunkt 25 entsprechendes Maß des Durchmessers 32 entlang dem in Fig.6 gezeigten Bewegungsabschnitt 33 verstellt werden. Anschließende wird der Laserstrahl 5 entlang einem Bewegungsabschnitt 34, in einer dem Pfeil 30 in Fig. 3 entgegengesetzten Richtung wieder in die in Fig. 2 gezeigte Stellung zurückbewegt. Zum besseren Verständnis der Darstellung in Fig. 6 ist festzuhalten, daß die gezeigte Bewegungsbahn nur die Bewegung des reflektierten Laserstrahles im Bereich des Brennpunktes 25 wiedergibt.

Daran anschließend bewegt sich der Laserstrahl 5 bzw. dessen Hauptstrahl 22 aus der in strichlierten Linien gezeichneten Lage - welche dem Verlauf des Laserstrahles 5 in Fig. 2 entspricht - in die in vollen Linien gezeichnete Stellung, also somit in eine dem Pfeil 28 entgegengesetzte Richtung. Während dieser Bewegung wird der Laserstrahl 5 durch den Bauteil 3 abgeschattet, sodaß es keinen reflektierten Strahl gibt und demgemäß der Bewegungsabschnitt 34 im Seitenbereich der Beschichtung endet. Die Bewegung des Laserstrahles 5 in eine dem Pfeil 28 entgegengesetzte Richtung wird solange fortgesetzt, bis der Hauptstrahl 22 die von der Geraden 23 abgewendete Seite des Bauteiles 3 tangiert. Dadurch trifft der Laserstrahl 5 wieder auf den Hohlspiegel 19 auf und wird in einem neben dem Bauteil 3 liegenden Bereich reflektiert. Bevor nun der Laserstrahl 5 wieder in seine mit der Geraden 23 fluchtende Ausgangsstellung zurückbewegt wird, wird er um ein einen Durchmesser 32 des Laserstrahles im Brennpunkt 25 entsprechendes Ausmaß parallel zu einer Längsrichtung des als Draht ausgebildeten Bauteiles 3 verstellt, wie dies schematisch durch einen Bewegungsabschnitt 35 in Fig.6 gezeigt ist.

In Fig.7 ist anhand von Bewegungsabschnitten 36,37 und 38 die Bewegung des Laserstrahles 5 im Bereich des Brennpunktes 24 und unter Bezugnahme auf die den Laserstrahl zugewandte Seite des Bauteiles 3 gezeigt. In dieser Darstellung der Bewegungsbahn des Laserstrahles entsprechen die über den Bauteil 3 vorragenden Teile der Bewegungsabschnitte 36 und 38 jenen Bereichen, in welchen der reflektierte Laserstrahl die Bewegungsabschnitte 31 und 34 durchfährt, während die im Querschnittsbereich des Bauteiles 3 liegenden Teile des Bewegungsabschnittes 36 und 38 jenen Bereichen entsprechen, die sich zwischen den Bewegungsabschnitten 31 und dem Bewegungsabschnitt 35 in Fig. 6 befinden. Der Bewegungsabschnitt 35 des reflektierten Laserstrahles entspricht dabei dem Bewegungsabschnitt 37 des am Bauteil bzw. am Hohlspiegel 19 auftreffenden Laserstrahles 5. Vom Bewegungsabschnitt 37 bewegt sich der Laserstrahl 5 entlang des Bewegungsabschnittes 38 wieder in eine mit der Geraden 23 fluchtende Stellung zurück. Danach wird der vorstehend geschilderte Verfahrensablauf gemäß den Fig.6 und 7 wiederholt. Die Wiederholung erfolgt solange, bis die Beschichtung 2 im gewünschten Bereich zur Gänze abgetragen ist.

Um die Relativbewegung zwischen dem Laserstrahl 5 und dem Bauteil 3 sowohl in Längs- als auch in Querrichtung des Bauteiles 3 zu ermöglichen, kann wie in Fig.1 weiters gezeigt, die Nachführvorrichtung 16 einen Drehantrieb 39 für den Umlenkspiegel 8 und gleichzeitig einen Höhenverstellantrieb 40 für den Drehantrieb 39 aufweisen. Der Drehantrieb 39 kann hierzu auf einem Tragrahmen 41 befestigt sein, der entlang von einer beispielsweise durch Führungssäulen gebildete Führungsbahn 42 mit dem Höhenverstellantrieb 40 verstellbar ist. Dabei ist es vorteilhaft, wenn der Tragrahmen 41 gleichzeitig die Sammellinse 9 und die Reflexionsvorrichtung 18 lagert, sodaß über den gesamten Verstellbereich gleichbleibende Abstandsverhältnisse und Strahlenverläufe eingehalten werden können.

Gleichermaßen ist es aber auch möglich, die Nachführvorrichtung 17 mit einem Höhenverstellantrieb 43 oder einem Querverstellantrieb 44 auszustatten, sodaß eine Haltevorrichtung 45 für den Bauteil 3 sowohl in Längsrichtung des Bauteiles 3 gemäß Pfeil 46, als auch in Querrichtung zum Laserstrahl 5, beispielsweise entlang einer durch Führungssäulen gebildeten Führungsbahn 47 verstellt werden kann.

Diese Höhen- und Querverstellung mit den Nachführvorrichtungen 16 und 17 kann so aufgeteilt sein, daß eine Relativbewegung des Laserstrahles 5 quer zur Längsrichtung des Bauteiles 3, beispielsweise durch den Drehantrieb 3 für den Umlenkspiegel 8 erfolgt, während die Längsbewegung des Bauteiles 3 in Drahtlängsrichtung mittels des Höhenverstellantriebes 43 erfolgt. Es ist aber auch möglich, sowohl die Höhen- und als auch die Querverstellbewegungen ausschließlich mit der Nachführvorrichtung 16 oder 17 vorzunehmen oder die Verstellungen durch eine Kombination von Verstellbewegungen mit den verschiedenen Nachführvorrichtungen zu bewirken.

Zur exakten Einstellung der Brennpunkte 24 und 25 ist es, unabhängig davon, ob die Sammellinse 9 und die Reflexionsvorrichtung 18 auf einem gemeinsamen Tragrahmen 41 oder auf eigenen Traggestellen angeordnet ist, vorteilhaft, wenn diesen Justiervorrichtungen 48 zur Einstellung des Abstandes relativ zueinander bzw. zum Umlenkspiegel 8 bzw. dem Bauteil 3 zugeordnet sind. Selbstverständlich können diese Justiervorrichtungen auch entsprechende Einstellorgane zur höhenmäßigen Justierung - in Längsrichtung des Bauteiles 3 - aufweisen.

Wie weiters in Fig.1 schematisch durch eine Heizwendel angedeutet, kann die Haltevorrichtung 45 mit einer Heizeinrichtung 49 für den Metallkern des Bauteiles 3 versehen sein. Durch diese Heizung ist es möglich, die Grundtemperatur zu erhöhen, sodaß die benötigte Energie zum Abschmelzen der durch eine Isolierung gebildete Beschichtung 2 verringert werden kann.

Die Zufuhr von Blasluft durch die Düse 14 bzw. das Absaugen der Luft aus dem Bereich des Bauteiles 3 kann zyklisch in aufeinanderfolgenden Schritten oder kontinuierlich erfolgen.

Wie weiters schematisch angedeutet, kann dem lasergenerator 6 ein Strahlunterbrecher 50 nachgeordnet sein, mit dem der Laserstrahl 5 unterbrochen werden kann.

Zur Steuerung und Überwachung der Vorrichtung 1 und insbesondere der Tätigkeit der Nachfühvorrichtung 16 und 17, sowie des Lasergenerators 6, ist eine Steuervorrichtung 51 vorgesehen, die mit den Antrieben der Nachführvorrichtung 16 und 17, sowie des Lasergenerators und des Strahlunterbrechers 50 sowie dem Ventilator 15 zusammengeschaltet ist.

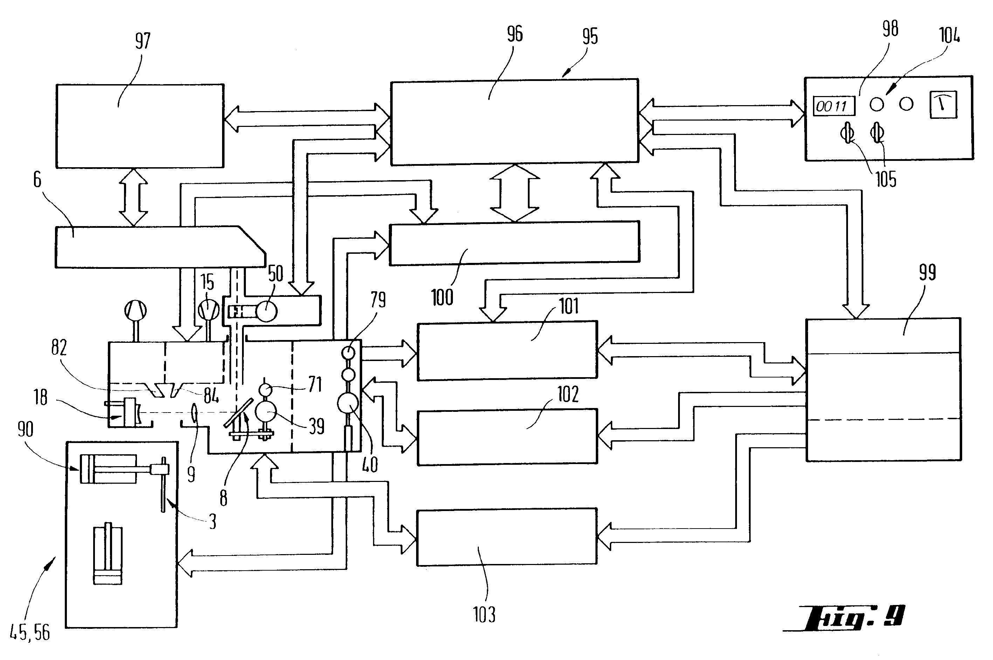

In Fig.8 ist eine Vorrichtung 1 zum Entfernen einer Beschichtung 2 von einem Metallkern 4 eines Bauteiles 3 gezeigt. Diese Vorrichtung 1 besteht aus einem Tragrahmen 52, der Führungssäuler 53 lagert. Auf den Führungssäulen 53 ist in einer Halterung 54 die Sammellinse 9 gelagert, während in einer Halterung 55 der Hohlspiegel 19 angeordnet ist. Die Halterungen 54 und 55 sind über Justiervorrichtungen 48, insbesondere Mikrometereinstellvorrichtungen in Längsrichtung der Führungssäulen 53 unabhängig voneinander verstellbar gelagert. Dadurch können die in Fig.3 mit 24 und 25 bezeichneten Brennpunkte exakt in den Bereich der Beschichtung 2 positioniert werden. Der Bauteil 3 wird zur Bearbeitung mit dem Laserstrahl 5 zwischen der Sammellinse 9 und dem Hohlspiegel 19 in einer Aufnahmevorrichtung 56 gehaltert, die auf einem Werkstückträger 57 einer Fördervorrichtung 58 angeordnet ist. Die Fördervorrichtung 58 umfaßt weiters auf einem Maschinentisch 59 abgestützte Führungsleisten 60, entlang welcher der Werkstückträger 57 mit Rollen 61 sowohl der Höhe als auch der Seite nach spielfrei geführt ist. Als Antriebsvorrichtung für den Werkstückträger 57 dienen an einer Seitenfläche 62 angelegte Reibrollen 63. In dem Tragrahmen 52 ist weiters der Umlenkspiegel 8 um eine Schwenkachse 27 verdrehbar gelagert. Die Schwenkachse 27 ist drehfest mit einem Übertragungshebel 64 gekuppelt. Der Übertragungshebel 64 lagert eine in Richtung eines Schwenkhebels 65 geöffnete Gabel 66. Der Schwenkhebel 65 weist an seinem der Gabel 66 zugewandten Ende eine Führungsrolle 67 auf, die durch eine Verschwenkung des Schwenkhebels 65 um eine Achse 68 entsprechend dem Grad der Schrägstellung der Gabel 66 zu einer mehr oder weniger großen Auslenkung des Übertragungshebels 64 in Längsrichtung der Achse 68 führt. Die Verstellung des Schwenkhebels 65 erfolgt dabei über eine Exzenterscheibe 69, die über einen Antriebsmotor 70 in Rotation versetzt wird. Mit einem Meßwertgeber 71 kann über eine mit dem Schwenkhebel 65 verbundene Tastgabel 72 das Maß der Auslenkung sowie die Schwenkfrequenz des Umlenkspiegels 8 ermittelt werden. Die Wirkung der Verschwenkung des Umlenkspiegels 8 sowie das Ausmaß der Verschwenkung ist am besten aus den Darstellungen in den Fig.2 bis 7 zu entnehmen.

Der Tragrahmen 52 ist entlang von Führungssäulen 73 verstellbar gelagert. Diese sind ebenso wie ein Verstellantrieb 74 auf einem am Maschinentisch 59 abgestützten Traggerüst 75 befestigt. Durch eine Rotation des Antriebsmotors 70 wird eine Gewindespindel 76 in Rotation versetzt und eine mit dem Tragrahmen 52 verbundene Wandermutter 77 bewirkt eine Verstellung des Tragrahmens 52 entlang der Führungssäulen 73 bzw. entsprechend einer Richtung eines Doppelpfeiles 78. Die Stellung des Tragrahmens 52 gegenüber dem Maschinentisch 59 bzw. dem Bauteil 3 oder dem Traggerüst 75, kann mit einem Meßwertgeber 79 ermittelt werden.

Zum Schutz des Bedienungspersonales und der Maschinenelemente vor einer unerwünschten Ablenkung des Laserstrahles 5 ist dieser in einem Strahlengang 80 angeordnet, der teleskopartig verstellbar ausgebildet ist und dessen Teile sich bei einer Höhenverstellung des Tragrahmens 52 ineinander schieben. Der Arbeitsbereich der Vorrichtung 1 ist überdies mit einer insbesondere verstellbaren Schutzhaube 81 versehen. Eine Absauganlage 82 für durch Pfeile 83 angedeutete Verdampfungsabgase ist in der Schutzhaube 81 angeordnet. Innerhalb der Schutzhaube 81 ist eine Düsenanordnung 84 vorgesehen, mit der durch Pfeile 85 angedeutete Luft oder ein Schutzgas zugeführt wird, um die Verdampfungsabgase sofort aus dem Bereich des Bauteiles 3 wegzublasen. Die Versorgung der Düsenanordnung 84 erfolgt im vorliegenden Ausführungsbeispiel über eine Druckluftversorgungsleitung.

Die Halterungen 54 und 55 sind mit einem Netz von Bohrungen 86 für ein Kühlmittel versehen, welches durch Leitungen 87 zugeführt und über Leitungen 88 abgeführt wird. Durch einen Meßwertgeber 89 in der Leitung 87 wird festgestellt, ob in den Leitungen bzw. den Bohrungen 86 Kühlmittel enthalten ist bzw. eine entsprechende Zirkulationsgeschwindigkeit des Kühlmittels gegeben ist.

Zum Ausrichten und Positionieren des Drahtes zwischen der Sammellinse 9 und dem Hohlspiegel 19 ist ein Drahtrichtgreifer 90 vorgesehen. Über den Drahtrichtgreifer zugeordnete Überwachungsorgane 91,92 kann das Vorhandensein eines Bauteiles 3 im Drahtrichtgreifer 90 und die richtige Lage des Drahtrichtgreifers 90 überwacht werden.

Mit weiteren Überwachungsorganen 93 und 94 kann die Anwesenheit eines Werkstückträgers 57 im Bereich der Bearbeitungsstation und die geschlossene Stellung der Schutzhaube 81 überwacht werden.

Der Drahtrichtgreifer 90 im Bereich des Bauteiles 3 ist deshalb vorgesehen, um eine eindeutige Positionierung des über die Aufnahmevorrichtung 56 vorstehenden Teiles des Bauteiles 3 sicherzustellen, sodaß eine einwandfreie Entfernung der Beschichtung erreicht wird.

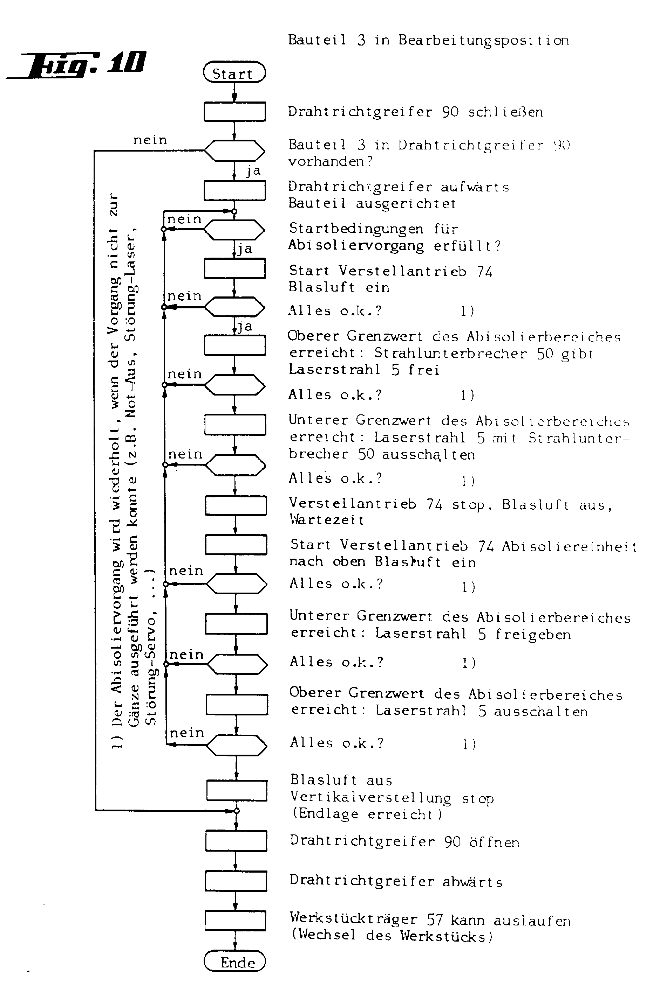

In den Fig.9 und 10 soll die Funktion einer der Vorrichtung 1 zugeordneten Steuereinrichtung 95 anhand des Blockschaltbildes in Verbindung mit einem in Fig.10 dargestellten Funktionsablaufes in einem Steuerrechner 96 dieser Steuereinrichtung 95 beschrieben werden.

Die Steuereinrichtung 95 umfaßt in dem Steuerrechner 96 eine Lasersteuerung 97, ein diesem zugeordneten Bedienungsfeld 98, ein manuell bedienbares Steuerpult 99 für die Einstellung der Grenzen für eine Vertikalhubgeschwindigkeit und eine Oszillationsfrequenz des drehbaren Umlenkspiegels 8 und eines Umsetzeinheit 100 für Ein- oder Ausgangssignale. Dem Steuerrechner 96 ist weiters ein Positionsüberwachungsvorrichtung 101 sowie eine Höhensteuervorrichtung 102 und eine Drehantriebssteuerung 103 zugeordnet. Auf dem Bedienungsfeld 98 sind Anzeigegeräte 104 und Einstellorgane 105 angeordnet.

Für die in den Fig.1 und 8 bereits beschriebenen Antriebs- bzw. Vorrichtungsteile werden der besseren Übersichtlichkeit wegen dieselben Bezugszeichen wie in den Fig.1 und 8 verwendet.

Der Programmablauf im Steuerrechner 96 kann nun folgendermaßen sein:

Von dem Steuerrechner 96 wird die Funktionsbereitschaft des Antriebsmotors 70 für die Schwenkbewegung des Umlenkspiegels 8, sowie die Bereitschaft des Lasergenerators 6 und die ordnungsgemäße Funktion des Verstellantriebes 74 zur Höhenverstellung des Tragrahmens 52 abgefragt. Weiters wird vom Steuerrechner der Status der Überwachungsorgane 91 und 92 ermittelt, nämlich ob ein Draht im Drahtrichtgreifer 90 enthalten ist und ob sich der Drahtrichtgreifer 90 in seiner oberen Position befindet, abgefragt. Gleichzeitig wird über ein Überwachungsorgan die ordnungsgemäße Funktion der Absauganlage 82 überprüft. Dazu ist in der Absauganlage 82 ein Meßwertgeber vorgesehen, ebenso ist in der Zuleitung zur Düsenanordnung 84 ein Überwachungsglied angeordnet.

Weiters wird das Überwachungsorgan 94 abgefragt, ob die Schutzhaube 81 geschlossen ist. Schlußendlich wird rückgefragt, ob am Bedienungsfeld mittels Einstellorganen 105 ein Grenzwert des Abisolierbereiches eingestellt ist.

Daran anschließend wird der in Fig.10 gezeigte Funktionsablauf gestartet. Dazu wird festgestellt, ob sich ein Bauteil 3 auf einem Werkstückträger 57 in einer Bearbeitungsposition befindet, wozu ein Ausgangssignal des Überwachungsorganes 93 verwendet wird. Ist ein Bauteil 3 in Bearbeitungsposition, kommt der Befehl "Drahtrichtgreifer 90 schließen". Danach wird über das Überwachungsorgan 91 abgefragt, ob der Bauteil 3 im Drahtrichtgreifer 90 vorhanden ist. Daran anschließend wird der Drahtrichtgreifer aufwärts verstellt und der Bauteil ausgerichtet. Danach werden die vorstehend beschriebenen Startbedingungen für den Abisoliervorgang abgefragt. Wenn nicht alle Startbedingungen erfüllt sind, kommt es zu einem automatischen Rücksetzen und Wiederabfragen der Startbedingungen. Sind alle Startbedingungen erfüllt, kommt der Startimpuls für den Verstellantrieb 74 und die Düsenanordnung 84 wird aktiviert und Blasluft wird in den Arbeitsbereich des Laserstrahles 5 zugeführt.

Danach wird abgefragt, ob alles in Ordnung ist. Nach Erreichen eines mit dem Einstellorganen 105 vorwählbaren oberen Grenzwertes des Abisolierbereiches wird der Strahlunterbrecher 50 aus dem Laserstrahl 5 herausgeschwenkt und der Laserstrahl freigegeben. Nach der Zwischenabfrage, ob alles in Ordnung ist, wird der Abisoliervorgang fortgesetzt, bis der mit den Einstellorganen 105 eingestellte untere Grenzwert des Abisolierungsbereiches erreicht ist. Daraufhin wird der Laserstrahl 5 mit dem Strahlunterbrecher 50 unterbrochen.

Danach wird die Verstellbewegung des Verstellantriebes 74 unterbrochen und die Blasluft ausgeschaltet. Nach einer Wartezeit kann nochmals ein Startbefehl für den Verstellantrieb 74 gegeben und die Düsenanordnung 84 aktiviert werden.

Nach Erreichen des unteren Grenzwertes des Abisolierbereiches wird der Laserstrahl 5 freigegeben und der Abisoliergang solange durchgeführt, bis der obere Grenzwert des Abisolierbereiches erreicht ist und der Laserstrahl ausgeschaltet wird. Danach wird die Tätigkeit des Verstellantriebes 74 und die Lufzufuhr durch die Düsenanordnung 84 beendet. Daran anschließend wird der Drahtrichtgreifer 90 geöffnet und abwärts verstellt. Danach wird der Werkstückträger 57 freigegeben und läuft aus der Bearbeitungsstation aus. Gleichermaßen ist es bei einem Werkstückträger 57, der mehrere Bauteile 3 zum Entfernen einer Beschichtung bzw. einer Isolierung aufnimmt, auch möglich, den Werkstückträger 57 in die Position des nächsten zu Bearbeitenden Bauteiles 3 zu verschieben. Es kann aber auch ein weiterer Bauteil aus dem Werkstückträger 57 entnommen und in eine Bearbeitungsposition verbracht werden. Nach diesem Arbeitsvorgang ist der Verfahrensablauf beendet und es kann ein neuer gleichartiger Verfahrensablauf eingeleitet werden.

Zu dem vorgeschilderten Verfahrensablauf ist festzuhalten, daß die zweimalige Beaufschlagung des Bearbeitungsbereiches mit dem Laserstrahl 5 nicht zwingend ist, sondern daß es auch möglich ist, nur in einer Richtung über den Bearbeitungsbereich mit dem Laserstrahl 5 hinwegzufahren, worauf das Werkstück bereits gewechselt werden kann.

Selbstverständlich ist es, ohne von dem Gegenstand der vorliegenden Erfindung abzuweichen, möglich, anstelle eines Steuerrechners mit dem vorstehenden Programmablauf jede beliebige andere digitale oder analoge Steuerung zu verwenden, mit der ein gleicher oder ähnlicher Verfahrensablauf erzielt werden kann.

Zum Abdampfen von Beschichtungen mittels eines Laserstrahles 5 ist es erforderlich, daß die unterhalb der zu entfernenden Beschichtung vorgesehenen Oberflächen hochglänzend, also beispielsweise verkupfert, versilbert oder mit einer sonstigen hochglänzenden Oberfläche versehen sind, sodaß der Laserstrahl nach dem Durchdringen bzw. Abdampfen der Beschichtung von dieser Oberfläche des Kernmateriales bzw. Metallkernes reflektiert wird. Wird dies nämlich nicht ausreichend berücksichtigt und ist die Oberfläche des unter der abzutragenden Beschichtung vorhandenen Metallkernes bzw. Kernmateriales nicht ausreichend, so kann es dazu kommen, daß durch den Laserstrahl 5 auch die Kernschicht bzw. der Metallkern zerschmolzen oder abgebrannt wird. Durch die hohe Leistung eines Laserstrahles 5 ist es auch möglich, die auf Drähten für elektrische Spulen angeordnete zweifache Beschichtung mit Polyamiden in einem selbsttätigen Arbeitsvorgang zu entfernen.

Anstelle der Verwendung eines Hohlspiegels 19 als Reflexionsvorrichtung 18 können auch mehrere in unterschiedlichen Winkeln zum Verlauf des Laserstrahles angeordnete plane Spiegel verwendet werden, Dadurch ist es möglich, den hin- und herbewegten Laserstrahl unter einem möglichst großen Winkel - im Idealfall 90° - auf die Oberfläche der Beschichtung zu reflektieren. Dadurch kann auch über einen gesamten Umfang eines Bauteiles eine möglichst gleichhohe Energie auf eine zu entfernende Beschichtung aufgebracht werden.

Während, wie bereits vorstehend erwähnt, die Spiegel oder Hohlspiegel durch Hochglanz polierte Aluminiumteile gebildet werden können, kann als Material für Sammellinsen, beispielsweise Zinkselenid Verwendung finden.

# Bezugszeichenaufstellung

| | |
|---|---|
| 1 Vorrichtung | 53 Führungssäule |
| 2 Beschichtung | 54 Halterung |
| 3 Bauteil | 55 Halterung |
| 4 Metallkern | 56 Aufnahmevorrichtung |
| 5 Laserstrahl | 57 Werkstückträger |
| 6 Lasergenerator | 58 Fördervorrichtung |
| 7 Umlenkspiegel | 59 Maschinentisch |
| 8 Umlenkspiegel | 60 Führungsleiste |
| 9 Sammellinse | 61 Rolle |
| 10 Distanz | 62 Seitenfläche |
| 11 Durchmesser | 63 Reibrolle |
| 12 Abgaswolke | 64 Übertragungshebel |
| 13 Pfeil | 65 Schwenkhebel |
| 14 Düse | 66 Gabel |
| 15 Ventilator | 67 Führungsrolle |
| 16 Nachführvorrichtung | 68 Achse |
| 17 Nachführvorrichtung | 69 Exzenterscheibe |
| 18 Reflexionsvorrichtung | 70 Antriebsmotor |
| 19 Hohlspiegel | 71 Meßwertgeber |
| 20 Distanz | 72 Tastgabel |
| 21 Abstand | 73 Führungssäule |
| 22 Hauptstrahl | 74 Verstellantrieb |
| 23 Gerade | 75 Traggerüst |
| 24 Brennpunkt | 76 Gewindespindel |
| 25 Brennpunkt | 77 Wandermutter |
| 26 Winkel | 78 Doppelpfeil |
| 27 Schwenkachse | 79 Meßwertgeber |
| 28 Pfeil | 80 Strahlengang |
| 29 Hauptstrahl | 81 Schutzhaube |
| 30 Pfeil | 82 Absauganlage |
| 31 Bewegungsabschnitt | 83 Pfeil |
| 32 Durchmesser | 84 Düsenanordnung |
| 33 Bewegungsabschnitt | 85 Pfeil |
| 34 Bewegungsabschnitt | 86 Bohrung |
| 35 Bewegungsabschnitt | 87 Leitung |
| 36 Bewegungsabschnitt | 88 Leitung |
| 37 Bewegungsabschnitt | 89 Meßwertgeber |
| 38 Bewegungsabschnitt | 90 Drahtrichtgreifer |
| 39 Drehantrieb | 91 Überwachungsorgan |
| 40 Höhenverstellantrieb | 92 Überwachungsorgan |

41 Tragrahmen
42 Führungsbahn
43 Höhenverstellantrieb
44 Querverstellantrieb
45 Haltevorrichtung

46 Pfeil
47 Führungsbahn
48 Justiervorrichtung
49 Heizeinrichtung
50 Strahlunterbrecher

51 Steuervorrichtung
52 Tragrahmen

93 Überwachungsorgan
94 Überwachungsorgan
95 Steuereinrichtung
96 Steuerrechner
97 Lasersteuerung

98 Bedienungsfeld
99 Steuerpult
100 Umsetzeinheit
101 Positionsüberwachungs-
    vorrichtung

102 Höhensteuervorrichtung
103 Drehantriebssteuerung
104 Anzeigegerät
105 Einstellorgan

**Patentansprüche**

1. Verfahren zum Entfernen von Beschichtungen (2) von Bauteilen (3), mit einem Laserstrahl (5), insbesondere zum Entfernen von Isolierschichten (2) von Drähten (3) bei dem durch eine Relativbewegung zwischen dem Laserstrahl (5) und dem Bauteil (3) der Laserstrahl (5) auf den Bereich, in welchem die Beschichtung (2) entfernt werden soll, gerichtet ist sowie über diesen bewegt wird und die Beschichtung (2) durch den Laserstrahl (5) über den Verdampfungspunkt erhitzt wird, dadurch gekennzeichnet, daß ein Teil der Beschichtung (2) durch den seitlich am Bauteil (3) vorbeigeführten und über eine Reflexionsvorrichtung (18) reflektierten Laserstrahl (5) verdampft wird.

2. Verfahren nach Anspruch 1, dadurch gekennzeichnet, daß der Laserstrahl (5) und der Bauteil (3) in eine winkelig zueinander verlaufende Lage verbracht werden und der Laserstrahl (5) quer zu einer Längsachse des Bauteiles (3) um ein Ausmaß verschwenkt wird, welches größer ist, als eine Breite des Bauteiles (3).

3. Verfahren nach Anspruch 2, dadurch gekennzeichnet, daß das Ausmaß zumindest der doppelten Breite des Bauteiles (3) entspricht.

4. Verfahren nach einem der Ansprüche 1 bis 3, dadurch gekennzeichnet, daß die Reflexionsvorrichtung (18) in Richtung des Laserstrahles (5) hinter dem Bauteil (3) angeordnet ist und eine Distanz (20) zwischen der Reflexionsvorrichtung (18) und dem Bauteil (3) einer Brennweite der Reflexionsvorrichtung (18) entspricht.

5. Verfahren nach einem der Ansprüche 1 bis 4, dadurch gekennzeichnet, daß der Laserstrahl (5) soweit über eine Seitenbegrenzung des Bauteiles (3) hinausgeführt wird, bis sich der von der Reflexionsvorrichtung (18) reflektierte Hauptstrahl (22) zumindest im Mittel eines vom Laserstrahl (5) abgewendeten Beschichtungsteiles befindet.

6. Verfahren nach einem der Ansprüche 1 bis 5, dadurch gekennzeichnet, daß der Laserstrahl (5) beidseits über die Seitenbegrenzung des Bauteiles (3) soweit hinausgeführt wird, daß sich die von der Reflexionsvorrichtung (18) reflektierten Hauptstrahlen (22,29) in ihrer beidseits des Bauteiles (3) distanzierten Endstellung auf der vom Laserstrahl (5) abgewendeten Seite des Bauteiles (3) überschneiden.

7. Verfahren nach einem der Ansprüche 1 bis 6, dadurch gekennzeichnet, daß die Brennpunkte (24,25) von Linsen (9) und bzw. oder Spiegeln (7,8) einer Sammellinsenvorrichtung und bzw. oder der Reflexionsvorrichtung (18) beidseits des Bauteiles (3) auf einer gemeinsamen Geraden angeordnet werden und der Bauteil (3) mit den zu bearbeitenden Bereichen zwischen der Reflexionsund Sammellinsenvorrichtung (18) angeordnet ist und die Gerade den Bauteil (3) tangiert.

8. Verfahren nach einem der Ansprüche 1 bis 7, dadurch gekennzeichnet, daß ein Hauptstrahl (22,29) einer Eingangspupille bei auf dem Brennpunkt der Linsen (9) und bzw. oder Spiegel (7,8) gerichteten Laserstrahlen (5) mit der Geraden fluchtet.

9. Verfahren nach einem der Ansprüche 1 bis 8, dadurch gekennzeichnet, daß der Laserstrahl (5) über die Eintrittspupille und über einen Schwenkspiegel und eine Sammellinsenvorrichtung auf den Bauteil (3) oder auf die Reflexionsvorrichtung (18), z.B. einen Hohlspiegel gerichtet wird.

10. Verfahren nach einem der Ansprüche 1 bis 9, dadurch gekennzeichnet, daß der Laserstrahl (5) zwischen den beiden Endstellungen pendelt und jeweils bei Erreichen einer der Endstellungen der Laserstrahl (5) und der Bauteil (3) um ein, einer Dicke des Laserstrahles (5) senkrecht zur Pendelbewegung entsprechendes Ausmaß, relativ zueinander verstellt werden.

11. Verfahren nach einem der Ansprüche 1 bis 10, dadurch gekennzeichnet, daß der Laserstrahl (5) im Bereich der Endstellungen jeweils um ein einer Dicke des Laserstrahles (5) senkrecht zur Pendelbewegung entsprechendes Ausmaß senkrecht zur Pendelrichtung verstellt wird.

12. Verfahren nach einem der Ansprüche 1 bis 11, dadurch gekennzeichnet, daß der Bauteil (3) eine Pendelbewegung gegenüber dem Laserstrahl (5) ausführt und der Laserstrahl (5) jeweils senkrecht zu der Pendelbewegung verstellt wird.

13. Verfahren nach einem der Ansprüche 1 bis 12, dadurch gekennzeichnet, daß die beim Vergasen der Beschichtung entstehenden Dämpfe aus dem Arbeitsbereich, z.B. kontinuierlich abgeführt werden.

14. Verfahren nach einem der Ansprüche 1 bis 13, dadurch gekennzeichnet, daß die Dämpfe abgesaugt werden.

15. Verfahren nach einem der Ansprüche 1 bis 14, dadurch gekennzeichnet, daß der Laserstrahl (5) auf mehrere Teilstrahlen aufgeteilt und über mehrere Umlenkvorrichtungen, im wesentlichen senkrecht auf die zu bearbeitenden Flächenbereiche reflektiert wird, wobei eine Leistung des Laserstrahles (5) pro Flächeneinheit der Bearbeitungsfläche über den gesamten Querschnitt der Bearbeitungsfläche und bzw. oder für jeden Teilstrahl in etwa gleich groß ist.

16. Verfahren nach einem der Ansprüche 1 bis 15, dadurch gekennzeichnet, daß der Laserstrahl (5) bzw. die Laserteilstrahlen entlang von sich einander zumindest berührenden Bewegungsbahnen über den Bearbeitungsbereich geführt werden und über den gesamten Bearbeitungsbereich eine Distanz zwischen der zu bearbeitenden Oberfläche und dem Brennpunkt des Laserstrahles (5) bzw. Laserstrahlteiles gleich gehalten wird.

17. Verfahren nach einem der Ansprüche 1 bis 16, dadurch gekennzeichnet, daß dem Bauteil (3), insbesondere einem unter der Beschichtung (2) angeordneten Metallkörper (4) vor und bzw. oder während des Abdampfens der Beschichtung Wärme zugeführt wird.

18. Vorrichtung (1) zum Entfernen von Beschichtungen (2) von Bauteilen (3), insbesondere zum Entfernen von Isolierschichten von Drähten mit einem Laserstrahl (5), mit einem Laser, einer Laserstrahlleitvorrichtung, einer Sammellinsenvorrichtung für den Laserstrahl (5) sowie einer Haltevorrichtung für den Bauteil (3) und einer Steuereinrichtung (99) mit einer Nachführvorrichtung für den Laserstrahl (5) und bzw. oder den Bauteil (3) zur Durchführung des Verfahrens nach einem der Ansprüche 1 bis 17, dadurch gekennzeichnet, daß auf der von der Sammellinse (9) abgewendeten Seite der Haltevorrichtung (45) des Bauteiles (3) eine Reflexionsvorrichtung (18) für den Laserstrahl (5) angeordnet ist und die Nachführvorrichtung (16,17) einen Verstellbereich aufweist, der größer ist als eine Breite des Bauteiles (3) im Bereich der zu verdampfenden Beschichtung (2).

19. Vorrichtung nach Anspruch 18, dadurch gekennzeichnet, daß die Reflexionsvorrichtung (18) durch einen Hohlspiegel (19) gebildet wird.

20. Vorrichtung nach einem der Ansprüche 18 oder 19, dadurch gekennzeichnet, daß die Reflexionsvorrichtung (18) durch eine plankonvexe Linse und einen planen Spiegel gebildet wird und die konvexe Seite der Linse dem Spiegel und die plane Seite der Sammellinse (9) zugewendet ist.

21. Vorrichtung nach einem der Ansprüche 18 bis 20, dadurch gekennzeichnet, daß ein Brennpunkt (24,25) der Sammellinse (9) und bzw. oder des Hohlspiegels (19) im wesentlichen zwischen einer Oberfläche der abzudampfenden Beschichtung (2) und dem darunter angeordneten Kernmaterial, z.B. einem Metallkern (4) angeordnet ist.

22. Vorrichtung nach einem der Ansprüche 18 bis 21, dadurch gekennzeichnet, daß zwischen dem Lasergenerator (6) und der der Reflexionsvorrichtung (18) gegenüberliegenden Seite der Sammellinse (9) die Nachführvorrichtung (16) für den Laserstrahl (5) angeordnet ist.

23. Vorrichtung nach einem der Ansprüche 18 bis 22, dadurch gekennzeichnet, daß die Nachführvorrichtung (16) durch einen schwenkbaren Umlenkspiegel (8) gebildet ist.

24. Vorrichtung nach einem der Ansprüche 18 bis 23, dadurch gekennzeichnet, daß die Nachführvorrichtung (16) durch einen rotierenden Spiegel oder ein Prisma gebildet ist und ein Schwenkwinkel des Laserstrahles (5) größer ist, als ein Winkel zwischen an die beiden Seiten des Bauteiles (3) angelegten Tangenten.

25. Vorrichtung nach einem der Ansprüche 18 bis 24, dadurch gekennzeichnet, daß die Haltevorrichtung (45) des Bauteiles (3) mit der Nachführvorrichtung (17) verbunden ist.

26. Vorrichtung nach einem der Ansprüche 18 bis 25, dadurch gekennzeichnet, daß die Sammellinse (9) und die Reflexionsvorrichtung (18) auf einem Tragrahmen (41) bevorzugt unabhängig voneinander einstellbar gelagert sind und der Tragrahmen (41) Justiervorrichtung (48) lagert, die eine z.B. durch eine Gewindespindel gebildete Nachführvorrichtung aufweisen.

27. Vorrichtung nach einem der Ansprüche 18 bis 26, dadurch gekennzeichnet, daß die Haltevorrichtung (45) für den Bauteil (3) auf einem Werkstückträger (57) angeordnet ist und die Nachführvorrichtung durch eine Antriebsvorrichtung für den Werkstückträger (57) gebildet ist.

**Revendications**

1. Procédé pour enlever des revêtements (2) de pièces (3), avec un faisceau laser (5), notamment pour enlever des couches isolantes (2) de fils métalliques (3), selon lequel, par un mouvement relatif entre le faisceau laser (5) et la pièce (3), le faisceau laser (5) doit être dirigé sur la zone dans laquelle le revêtement (2) doit être enlevé et déplacé sur celle-ci, et le revêtement (2) est chauffé par le faisceau laser (5) au-delà du point de vaporisation, caractérisé en ce qu'une partie du revêtement (2) est vaporisée par le faisceau laser (5) conduit latéralement le long de la pièce (3) et réfléchi par un dispositif de réflexion (18).

2. Procédé selon la revendication 1, caractérisé en ce que le faisceau laser (5) et la pièce (3) sont emmenés dans des positions s'étendant l'une par rapport à l'autre selon un angle et que l'on fait pivoter le faisceau laser (5) perpendiculairement à l'axe longitudinal de la pièce (3) d'une valeur qui est supérieure à une largeur de la pièce (3).

3. Procédé selon la revendication 2, caractérisé en ce que la valeur correspond au moins au double de la largeur de la pièce (3).

4. Procédé selon l'une des revendications 1 à 3, caractérisé en ce que le dispositif de réflexion est placé, dans la direction du faisceau laser (5), derrière la pièce (3) et qu'une distance (20) entre le dispositif de réflexion (18) et la pièce (3) correspond à la distance focale du dispositif de réflexion (18).

5. Procédé selon l'une des revendications 1 à 4, caractérisé en ce que le faisceau laser (5) est conduit si loin au-delà d'une limitation latérale de la pièce (3) jusqu'à ce que le faisceau principal (22) réfléchi par le dispositif de réflexion (18) se trouve au moins au milieu d'une pièce de revêtement détournée du faisceau laser (5).

6. Procédé selon l'une des revendications 1 à 5, caractérisé en ce que le faisceau lazer est emmené aux deux côtés au-delà de la limitation latérale de la pièce (3) si loin que les faisceaux principaux (22, 29) réfléchis par le dispositif de réflexion (18) s'entrecroisent dans leur position finale éloignés de part et d'autre de la pièce (3) sur le côté de la pièce (3) qui est détournée du faisceau laser (5).

7. Procédé selon l'une des revendications 1 à 6, caractérisé en ce que les points focaux (24, 25) de lentilles (9) et ou de miroirs (7, 8) d'un dispositif de lentilles de convergences et ou du dispositif de réflexion (18) sont disposés de part et d'autre de la pièce (3) sur une droite commune, et la pièce (3), avec les zones à usiner ou traiter, est disposée entre les dispositifs de réflexion et de lentilles de convergences (18) et la droite constitue une tangente à la pièce (3).

8. Procédé selon l'une des revendications 1 à 7, caractérisé en ce qu'un faisceau principal (22, 29) d'une pupille d'entrée est en alignement avec la droite, les faisceaux laser (5) étant orientés sur le point focal des lentilles (9) et ou du miroir (7, 8).

9. Procédé selon l'une des revendications 1 à 8, caractérisé en ce que le faisceau laser (5) est orienté par la pupille d'entrée et par un miroir pivotant et un dispositif de lentilles de convergence sur la pièce (3) ou sur le dispositif de réflexion (18), par exemple un miroir concave.

10. Procédé selon l'une des revendications 1 à 9, caractérisé en ce que le faisceau laser (5) oscille entre les deux positions extrêmes et à l'atteinte d'une des positions extrêmes, le faisceau laser (5) et la pièce (3) sont décalés l'un par rapport à l'autre selon une valeur ou un degré correspondant à l'épaisseur du faisceau laser (5) perpendiculaire au mouvement d'oscillation.

11. Procédé selon l'une des revendications 1 à 10, caractérisé en ce que le faisceau laser (5) est décalé dans la zone des positions extrêmes perpendiculairement à la direction d'oscillation d'une valeur correspondant à une épaisseur du faisceau lazer (5) perpendiculaire au mouvement d'oscillation.

12. Procédé selon l'une des revendications 1 à 11, caractérisé en ce que la pièce (3) exécute un mouvement d'oscillation par rapport au faisceau laser (5) et le faisceau laser (5) est déplacé perpendiculairement au mouvement d'oscillation.

13. Procédé selon l'une des revendications 1 à 12, caractérisé en ce que les vapeurs produites lors de la vaporisation du revêtement sont dégagées de la zone de travail, par exemple de façon continue.

14. Procédé selon l'une des revendications 1 à 13, caractérisé en ce que les vapeurs sont évacuées par aspiration.

15. Procédé selon l'une des revendications 1 à 14, caractérisé en ce que le faisceau laser (5) est divisé en plusieurs faisceaux partiels et est réfléchi par plusieurs dispositifs de renvoi, sensiblement perpendiculairement sur les zones de surface à traiter, une puissance du faisceau laser (5) par unité de surface de la surface traitée présentent une valeur sensiblement égale sur l'ensemble de la section transversale de la surface de traitement et/ou pour chaque faisceau partiel.

EP 0 355 096 B1

16. Procédé selon l'une des revendications 1 à 15, caractérisé en ce que le faisceau laser ou les faisceaux laser partiels sont conduits le long de voies de déplacement qui au moins se touchent, sur la zone de traitement, et qu'une distance entre la surface à traiter et le point focal du faisceau laser (5) ou des faisceaux laser partiels est maintenue constante sur l'ensemble de la zone de traitement.

17. Procédé selon l'une des revendications 1 à 16, caractérisé en ce que de la chaleur est emmenée à la pièce (3), notamment à un corps métallique (4) disposé en-dessous du revêtement (2), avant ou pendant l'enlèvement par vaporisation du revêtement.

18. Dispositif 1 pour enlever des revêtements (2) de pièces (3), notamment pour enlever des couches isolantes de fils métalliques, avec un faisceau laser (5), avec un laser, un dispositif de guidage de faisceau laser, un dispositif de lentilles de convergence pour le faisceau laser (5) ainsi qu'avec un dispositif de maintien de la pièce (3) et une installation de commande (99) avec un dispositif de poursuite pour le faisceau laser (5) et/ou la pièce (3) pour la mise en oeuvre du procédé selon l'une des revendications 1 à 17, caractérisé en ce que sur le côté détourné de la lentille de convergence (9), du dispositif de maintien (45) de la pièce (3) est disposé un dispositif de réflexion (18) pour le faisceau laser (5) et le dispositif de poursuite (16, 17) présente une zone de réglage ou de déplacement, qui est plus grande que la largeur de la pièce (3) dans la zone du revêtement (2) à enlever par vaporisation.

19. Dispositif selon la revendication (18), caractérisé en ce que le dispositif de réflexion (18) est formé par un miroir concave (19).

20. Dispositif selon l'une des revendications 18 ou 19, caractérisé en ce que le dispositif de réflexion (18) est formé par une lentille plan-convexe et par un miroir plan et le côté convexe de la lentille est orienté vers le miroir et le côté plan vers la lentille de convergence (9).

21. Dispositif selon l'une des revendications 18 à 20, caractérisé en ce qu'un point focal (24, 25) de la lentille de convergence (9) et/ou du miroir concave (19) est disposé sensiblement entre une surface du revêtement à enlever par vaporisation (2) et le matériau de noyau disposé en-dessous, par exemple un noyau métallique (4).

22. Dispositif selon l'une des revendications 18 à 21, caractérisé en ce que le dispositif de poursuite (16) pour le faisceau laser (5) est disposé entre le générateur laser (6) et le côté de la lentille de convergence (9), qui est situé en face du dispositif de réflexion (18).

23. Dispositif selon l'une des revendications 18 à 22, caractérisé en ce que le dispositif de poursuite (16) est formé par un miroir de renvoi pivotant (8).

24 Dispositif selon l'une des revendications 18 à 23, caractérisé en ce que le dispositif de poursuite (16) est formé par un miroir tournant ou un prisme et un angle de pivotement du faisceau laser (5) est supérieur à un angle entre les deux tangentes aux côtés de la pièce (3).

25. Dispositif selon l'une des revendications 18 à 24, caractérisé en ce que le dispositif de support (45) de la pièce (3) est relié au dispositif de poursuite (17).

26. Dispositif selon l'une des revendications 18 à 25, caractérisé en ce que la lentille de convergence (9) et le dispositif de réflexion (18) sont logés sur un cadre support (41), de préférence de façon indépendamment réglable, et le cadre support (41) loge des dispositifs de réglage (48) qui comprennent un dispositif de poursuite, par exemple une tige filtée.

27. Dispositif selon l'une des revendications 18 à 26, caractérisé en ce que le dispositif de support (45) pour la pièce (3) est disposé sur un support de pièces à usiner (57) et le dispositif de poursuite est formé par un dispositif d'entraînement pour le support de pièce à usiner (57).

## Claims

1. A method for the removal of coatings (2) from components (3), in particular for the removal of insulating layers (2) from wires (3) by means of a laser beam (5), in which a relative displacement between the laser beam (5) and the component (3) directs the laser beam (5) on to the area in which the coating (2) is to be removed and also moves it over this area and the coating (2) is heated beyond the point of vapourisation by the laser beam (5), characterised in that a part of the coating (2) is vapourised by the laser beam (5) which is laterally led past the component (3) and reflected on a reflector device (18).

2. A method according to claim 1, characterised in that the laser beam (5) and the component (3) are placed in an angled position with respect to one another and the laser beam (5) is pivotally displaced transversely to a longitudinal axis of the component (3) by a quantity exceeding the width of the component (3).

3. A method according to claim 2, characterised in that the said quantity corresponds to at least twice the width of the component (3).

4. A method according to one of the claims 1 to 3, characterised in that the reflector device (18) is installed

**14**

behind the component (3) in the direction of the laser beam (5) and that a distance (20) between the reflector device (18) and the component (3) corresponds to a focal length of the reflector device (18).

5. A method according to one of the claims 1 to 4, characterised in that the laser beam (5) is led so far beyond a lateral boundary of the component (3) that the principal beam (22) reflected by the reflector device (18) is situated at least at the centre of a coating section facing away from the laser beam (5).

6. A method according to one of the claims 1 to 5, characterised in that the laser beam (5) is led out so far beyond the lateral boundaries on either side of the component (3) that the principal beams (22,29) reflected by the reflector device (18) intersect one another at their terminal positions spaced apart from either side of the component (3) at the side of the component (3) facing away from the laser beam (5).

7. A method according to one of the claims 1 to 6, characterised in that the focal points (24,25) of lenses (9) and/or mirrors (7,8) of a condenser lens system and/or of the reflector device (18) are situated on a common straight line at either side of the component (3), that the component (3) has the areas to be processed arranged between the reflector- and condenser lens devices (18), and that the straight line is tangential to the component (3).

8. A method according to one of the claims 1 to 7, characterised in that a principal beam (22,29) of an input pupil is congruent with the straight line in the case of laser beams (5) directed at the focal point of the lenses (9) and/or mirrors (7,8).

9. A method according to one of the claims 1 to 8, characterised in that the laser beam (5) is directed via the input pupil and via a pivoting mirror and a condenser lens device at the component (3) or at the reflector device, e.g. being a concave mirror.

10. A method according to one of the claims 1 to 9, characterised in that the laser beam (5) reciprocates between the two terminal positions and that when one of the terminal positions is reached, the laser beam (5) and the component (3) are displaced in each case with respect to one another by a quantity corresponding to a thickness of the laser beam, at perpendicular to the pendular displacement.

11. A method according to one of the claims 1 to 10, characterised in that the laser beam (5) is in each case displaced in the area of the terminal positions perpendicular to the pendular direction by a quantity corresponding to a thickness of the laser beam (5) perpendicular to the pendular displacement.

12. A method according to one of the claims 1 to 11, characterised in that the component (3) describes a pendular movement with respect to the laser beam (5) and that the laser beam (5) is in each case displaced at right angles to the pendular movement.

13. A method according to one of the claims 1 to 12, characterised in that the vapours generated during vapourisation of the coating are drawn off from the area of operation, e.g. continuously.

14. A method according to one of the claims 1 to 13, characterised in that the vapours are drawn off by suction.

15. A method according to one of the claims 1 to 14, characterised in that the laser beam (5) is divided into several part beams and reflected via deflector devices, substantially perpendicular to the areal sections which are to be processed, an output of the laser beam (5) per unit of area of the processing area being approximately identical throughout the cross-section of the processing area and/or for each part beam.

16. A method according to one of the claims 1 to 15, characterised in that the laser beam (5) or the part laser beams are led along trajectories which at least touch one another and that a distance between the surface to be processed and the focal point of the laser beam (5) or part laser beam is kept constant.

17. A method according to one of the claims 1 to 16, characterised in that heat is supplied to the component (3), in particular being a metal element (4) situated beneath the coating (2), before and/or during the removal by vapourisation of the coating.

18. A device (1) for the removal of coatings (2) from components (3), in particular for removal of insulating layers from wires by means of a laser beam (5), comprising a laser, a laser beam guiding device, a condenser lens system for the laser beam (5) as well as a securing device for the component (3) and a control system (99) comprising a follow-up or tracking device for the laser beam (5) and/or the component (3) for implementation of the method according to one of the claims 1 to 17, characterised in that a reflector device (18) for the laser beam (5) is situated at the side of the securing device (45) of the component (3) facing away from the condenser lens (9) and that the tracking device (16, 17) has a range of adjustment which is greater than a width of the component (3) in the area of the coating (2) which is to be vapourised.

19. A device according to claim 18, characterised in that the reflector device (18) is formed by a concave mirror (19).

20. A device according to one of the claims 18 or 19, characterised in that the reflector device (18) is formed by a plano-convex lens and a plane mirror and the convex side of the lens faces towards the mirror and the plane side towards the component (3).

21. A device according to one of the claims 18 to 20, characterised in that a focal point (24,25) of the condenser lens (9) and/or of the concave mirror (19) is substantially positioned between a surface of the coating (2) which is to be removed by vapourisation and the underlying core or material, e.g. a metal core (4).

22. A device according to one of the claims 18 to 21, characterised in that the tracking device (16) for the laser beam (5) is situated between the laser generator (6) and the side of the condenser lens (9) opposite to the reflector device (18).

23. A device according to one of the claims 18 to 22, characterised in that the tracking device (16) is formed by a pivotable deflecting mirror (18).

24. A device according to one of the claims 18 to 23, characterised in that the tracking device (16) is formed by a rotating mirror or a prism and a pivoting angle of the laser beam (5) is greater than an angle between the tangents to the two sides of the component (3).

25. A device according to one of the claims 18 to 24, characterised in that the securing device (45) of the component (3) is connected to the tracking device (17).

26. A device according to one of the claims 18 to 25, characterised in that the condenser lens (9) and the reflector device (18) are installed on a support frame (41) preferably in an independently adjustable manner and the support frame (41) bears setting devices (48) which comprise a tracking device formed by a screw-threaded spindle, for example.

27. A device according to one of the claims 18 to 26, characterised in that the securing device (45) for the component (3) is installed on a workpiece carrier (57) and that the tracking device is formed by a driving mechanism for the workpiece carrier (57).

Fig. 1

17

Fig. 2

Fig. 3

Fig. 4

EP 0 355 096 B1

*Fig. 5*

*Fig. 6*

*Fig. 7*

EP 0 355 096 B1

19

Fig. 8

Fig. 9

EP 0 355 096 B1

**Fig. 10**

Bauteil 3 in Bearbeitungsposition

Start

Drahtrichtgreifer 90 schließen

Bauteil 3 in Drahtrichtgreifer 90 vorhanden? — nein / ja

Drahtrichtgreifer aufwärts Bauteil ausgerichtet

Startbedingungen für Abisoliervorgang erfüllt? — nein / ja

Start Verstellantrieb 74 Blasluft ein

Alles o.k.? — nein / ja   1)

Oberer Grenzwert des Abisolierbereiches erreicht: Strahlunterbrecher 50 gibt Laserstrahl 5 frei

Alles o.k.? — nein   1)

Unterer Grenzwert des Abisolierbereiches erreicht: Laserstrahl 5 mit Strahlunterbrecher 50 ausschalten

Alles o.k.? — nein   1)

Verstellantrieb 74 stop, Blasluft aus, Wartezeit

Start Verstellantrieb 74 Abisoliereinheit nach oben Blasluft ein

Alles o.k.? — nein   1)

Unterer Grenzwert des Abisolierbereiches erreicht: Laserstrahl 5 freigeben

Alles o.k.? — nein   1)

Oberer Grenzwert des Abisolierbereiches erreicht: Laserstrahl 5 ausschalten

Alles o.k.? — nein   1)

Blasluft aus Vertikalverstellung stop (Endlage erreicht)

Drahtrichtgreifer 90 öffnen

Drahtrichtgreifer abwärts

Werkstückträger 57 kann auslaufen (Wechsel des Werkstücks)

Ende

1) Der Abisoliervorgang wird wiederholt, wenn der Vorgang nicht zur Gänze ausgeführt werden konnte (z.B. Not-Aus, Störung-Laser, Störung-Servo, ...)

22